# EUROPEAN PATENT SPECIFICATION

(11) **EP 1 536 416 B1**
(45) Date of publication and mention of the grant of the patent: **03.06.2009**
(21) Application number: 04027804.6
(22) Date of filing: 23.11.2004
(51) Int. Cl.: G11B 7/0045, G11B 7/24, G11B 19/28, G11B 27/30

(54) **Information recording method**
Datenaufzeichnungsverfahren
Méthode pour enrégistrer des données

(30) Priority: 28.11.2003 JP 2003400834
(43) Date of publication of application: 01.06.2005
(73) Proprietor: Pioneer Corporation, Tokyo-to (JP); KABUSHIKI KAISHA TOSHIBA, Tokyo (JP); Panasonic Corporation, Kadoma-shi Osaka 571-8501 (JP); SAMSUNG ELECTRONICS CO., LTD., Suwon-si, Gyeonggi-do (KR); Hitachi Ltd., Tokyo (JP)
(72) Inventor: Sawabe, Takao, c/o Pioneer Corporation, Tokorozawa-shi Saitama-ken (JP); Nagai, Koichi, c/o Intellectual Prop. Division, Minato-ku Tokyo (JP); Taniguchi, Shoji c/o Pioneer Corporation, Tokorozawa-shi Saitama-ken (JP); Kobayashi, Tadashi, c/o Toshiba Corporation, Minato-ku Tokyo (JP); Yamaguchi, Hiroyuki, Nishinomiya-shi Hyogo-ken (JP); Akahira, Nobuo, Yawata-shi Kyoto-fu (JP); Ko, Jung-wan, Suwon-si Gyeonggi-do (KR); Takahashi, Masahiko, c/o Hitachi, Ltd., Yokohama-shi Kanagawa-ken (JP); Kurebayashi, Masaaki, c/o Hitachi, Ltd., Yokohama-shi Kanagawa-ken (JP)
(74) Representative: Tappe, Hartmut

(56) References cited:
- EP-A- 1 233 409
- EP-A- 1 308 942
- WO-A-03/091998
- WO-A-20/05004135
- US-A- 5 835 462

## Description

### BACKGROUND OF THE INVENTION

### 1.Field of the Invention

The present invention relates to technical fields of a recording medium, an information recording apparatus, an information recording method, and an information recording medium, and particularly to technical fields of a recording medium on which recording information can be recorded at one or several types of recording speeds, an information recording apparatus and an information recording method which record recording information on the recording medium, and an information recording medium on which an information recording program for the information recording is computer-readably recorded.

### 2.Description of the Related Art

In recent years, a DVD (Digital Versatile Disc) as a large-capacity recording medium on which recording information can be recorded has been widely used, and a recording speed for this recordable DVD has been rapidly made higher.

On the other hand, in order to expand the versatility of and widely use a CD (Compact Disc) as a conventional optical disk or the DVD, an information recording apparatus for the disk or the manufacturing of the disk has been developed and manufactured according to the preset standrd. As for improvement in recording speed, in order to record recording information while expanding the versatility between different types of information recording apparatuses, each manufacturer has developed and manufactured an optical disk and an information recording apparatus according to a standard of the preset recording speed.

At this time, the standard is authorized and distributed through many types of consultations or authentication tests from the need of being clearly known.

On the other hand, Japanese Patent Application Laid-Open No. 4-114318 discloses an information recording apparatus for recording information on an optical disk where a recording condition at a second rotational speed of a mounted optical disk is obtained to record information on the optical disk, based on a recording condition at a first rotational speed (first recording speed) read from the mounted optical disk, and a recording condition at the first and second rotational speeds (first and second recording speeds) stored in the information recording apparatus.

Meanwhile, Japanese Patent Application Laid-Open No. 2000-113458 discloses a structure where when information about a recordable speed is contained and recorded in read-out starting information of ATIP (Absolute Time In Pre-groove) information recorded in a pre-groove of a read-in area in an optical disk, and the optical disk is inserted into an information recording apparatus, the read-out starting information is read, and a recording speed at this time is automatically set to the maximum speed capable of being set in a range of the recordable speed instructed by the read-out starting information so that recording is performed.

WO 03/091998 describes a method of recording speed information including minimum and maximum recording speed on a recording medium. EP 1 233 409 describes a recording method, wherein for each of a plurality of different drives two recording speeds are recorded on a medium.

### SUMMARY OF THE INVENTION

In consideration of a recent notable request for improvement in the recording speed for the optical disk for the above standard, when the consultations or the authentication tests for a new recording speed standard are repeated each time a higher recording speed is newly realized, there is a problem that the standard is consequently delayed to be realized and a technique for high-speed recording is not sufficiently generalized and is not utilized.

Therefore, the present invention has been made in terms of the above problem, and is defined in the appended claims.

### BRIEF DESCRIPTION OF THE DRAWINGS

FIG. 1A is a diagram showing a physical format in a DVD according to one embodiment;
FIG. 1B is a diagram for explaining a concept of recording speed range information of the DVD according to the embodiment;
FIG. 2 is a block diagram showing a schematic structure of a recorder according to the embodiment; and
FIG. 3 is a flowchart showing a recording processing according to the embodiment.

### DETAILED DESCRIPTION OF THE INVENTION

One embodiment according to the present invention will be described below with reference to the drawings. The embodiment described below is one when the present invention is applied to a recordable DVD and a recorder as an information recording apparatus which records recording information on the DVD.

### (I) Embodiment of DVD

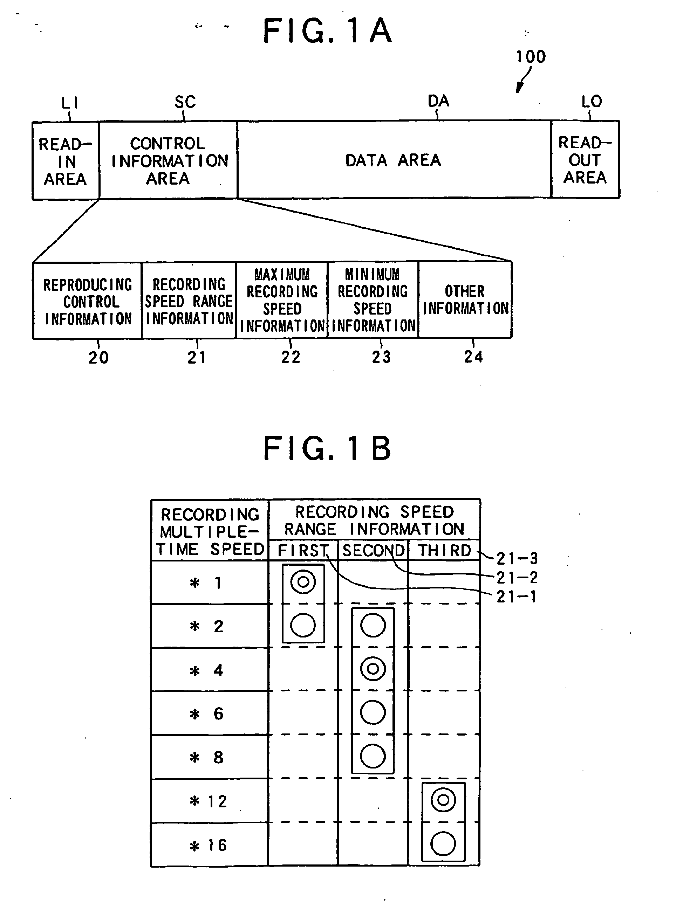

The embodiment of a recording DVD will be described using FIG. 1. FIG. 1 is a diagram showing a physical recording format in the DVD according to the present embodiment.

As shown in FIG. 1A, a recording DVD 100 according to the embodiment is specifically realized as a DVD-R (DVD-Recordable) using a pigment film as a recording layer, a DVD-RW (DVD-Re-Recordable) using a phase change film as a recording layer, or a DVD-RAM (DVD-Rewritable), and is configured of, from the inner periphery, a read-in area LI where control information or the like to be initially read when recording information is recorded/reproduced for the DVD 100 is recorded, a control information area SC where control information to be read when information is recorded/reproduced for the DVD 100 and to be used for various control processings is recorded, a data area DA where recording information to be actually recorded/reproduced is to be recorded (or is recorded), and a read-out area LO where control information or the like to be read when recording/reproducing of recording information for the DVD 100 is completed is recorded.

At this time, in the control information area SC, there are previously recorded, on a recording track by so-called pre-write or emboss pit, reproducing control information 20 required for reproducing the data area DA such as disk type information indicating a type of the DVD 100, or information indicating a standard version number, recording speed range information 21 according to the present invention indicating a preset recording speed range to be used when recording information is recorded on the DVD 100, maximum recording speed information 22 according to the present invention indicating the maximum recording speed capable of being physically used when recording information is recorded on the DVD 100, minimum recording speed information 23 according to the present invention indicating the minimum recording speed capable of being physically used when recording information is recorded on the DVD 100, and other information 24 as the control information. At this time, the other information 24 includes strategy information and the like for setting a strategy waveform described later for each recording speed.

The control information area SC may be formed inside the read-in area LI, and further may be formed to be overlapped on the recording area on which the recording information is recorded so that the information can be read out as sub-information of a recording track using a so-called land prepit or a wobbling of the recording track.

Next, the recording speed range information 21 will be described in more detail using FIG. 1B.

As described above, the recording speed range information 21 is previously recorded in the DVD 100 when being shipped after manufacture of the DVD 100, and a manufacturer of the DVD 100 presets the contents (recording speed within a range indicated by the recording speed range information 21) as the information indicating a recording speed range to be used when recording the recording information on the DVD 100.

As for the setting of the contents of the recording speed range information 21, at least one of the recording speeds capable of being always used when recording the recording information on the DVD 100 is set as a basic recording speed. When two types of DVDs 100 whose recording speed ranges are mutually different are present, the contents of the recording speed range information for each DVD 100 are preset such that the basic recording speed corresponding to at least one type of the DVD 100 is a recording speed outside the recording speed range indicated by the recording speed range information 21 recorded on the other type of the DVD 100.

More specifically, as shown in FIG. 1B, for example, first recording speed range information 21-1 indicating that the recording speed is uniform or double is recorded on the DVD 100 for uniform speed recording (indicated as "*1" in FIG. 1B) and double-speed recording (indicated as "*2" in FIG. 1B). In this first recording speed range information 21-1, the basic recording speed is set uniform (indicated by double circle in FIG. 1B), and in the information recording apparatus for the DVD 100 on which the first recording speed range information 21-1 is recorded, each parameter or the like in the information recording apparatus has to be set such that the recording information can be recorded at at least uniform speed.

Similarly, second recording speed range information 21-2 indicating that the recording speed can be set in a range from double-speed to 8-time speed is recorded on the DVD 100 for double-speed recording to 8-time speed recording (indicated as "*8" in FIG. 1B). In this second recording speed range information 21-2, the basic recording speed is 4-time speed, and in the information recording apparatus for the DVD 100 on which the second recording speed range information 21-2 is recorded, each parameter or the like in the information recording apparatus has to be set such that the recording information can be recorded at at least 4-time speed.

Further, third recording speed range information 21-3 indicating that the recording speed is 12-time speed or 16-time speed is recorded on the DVD 100 for 12-time speed recording (indicated as "*12" in FIG. 1B) to 16-time speed recording (indicated as "*16" in FIG. 1B). In this third recording speed range information 21-3, the basic recording speed is 12-time speed, and in the information recording apparatus for the DVD 100 on which the third recording speed range information 21-3 is recorded, each parameter or the like in the information recording apparatus has to be set such that the recording information can be recorded at at least 12-time speed.

The value itself of each recording speed described above is not recorded as the first recording speed range information 21-1, the second recording speed range information 21-2, or the third recording speed range information 21-3, but each recording speed range information is recorded in such a manner that the recording speed applied to the DVD 100 can be recognized by the information recording apparatus as being within the recording speed range separately prescribed in the standard of, for example, the first recording speed range information 21-1 (more specifically, in such a manner that a name of "first recording range information" is recorded, for example).

In the example shown in FIG. 1B, the basic recording speed (uniform speed) in the first recording speed range information 21-1 is out of the recording speed range indicated by the second recording speed range information 21-2, and the basic recording speed (4-time speed) in the second recording speed range information 21-2 is out of the recording speed range indicated by the first recording speed range information 21-1.

Further, the basic recording speed (4-time speed) in the second recording speed range information 21-2 is out of the recording speed range indicated by the third recording speed range information 21-3, and the basic recording speed (12-time speed) in the third recording speed range information 21-3 is out of the recording speed range indicated by the second recording speed range information 21-2.

In this example, the basic recording speed in the first recording speed range information 21-1 may be changed to double-speed, alternatively the basic recording speed in the second recording speed range information 21-2 may be changed to double-speed. This is because even when the basic recording speed in the first recording speed range information 21-1 is changed to double-speed, the basic recording speed (4-time speed) in the second recording speed range information 21-2 is maintained at the recording speed out of the recording speed range indicated by the first recording speed range information 21-1. Similarly, this is because even when the basic recording speed in the second recording speed range information 21-2 is changed to double-speed, the basic recording speed (uniform speed) in the first recording speed range information 21-1 is maintained at the recording speed out of the recording speed range indicated by the second recording speed range information 21-2.

In the aforementioned embodiment, the DVD 100 on which, for example, the second recording speed range information 21-2 is recorded does not need to be configured such that the DVD 100 is recordable for all the recording speed ranges indicated by the second recording speed range information 21-2 (that is, double-speed, 4-time speed (basic recording speed), 6-time speed, and 8-time speed), and as long as the DVD 100 is configured to record the recording information at the basic recording speed, the DVD 100 may be configured such that the recording information can be recorded at, for example, double-speed, 4-time speed, 6-time speed, but cannot be recorded at 8-time speed.

### (II) Embodiment of recorder

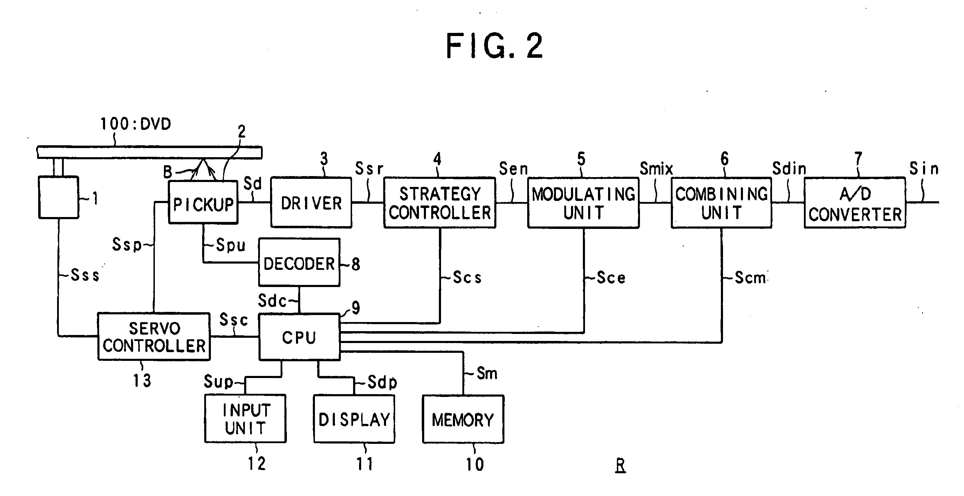

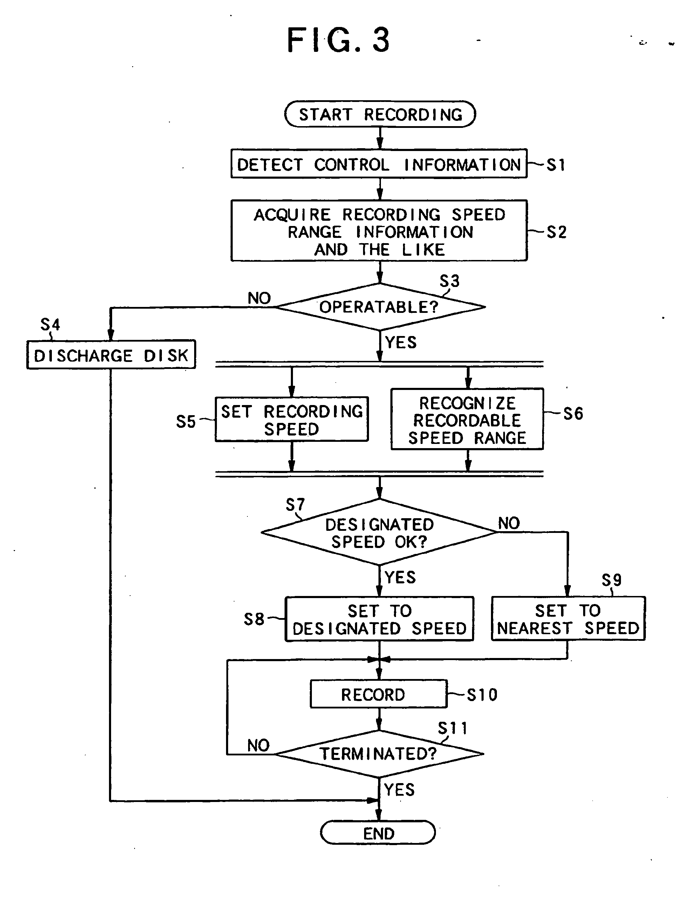

Next, an embodiment of a recorder which records recording information on the DVD 100 on which each control information is previously recorded using the physical format mentioned above will be specifically described using Figs. 2 and 3.

FIG. 2 is a block diagram showing a schematic structure of a recorder according to the embodiment, and FIG. 3 is a flowchart showing a recording processing to be executed in the recorder.

As shown in FIG. 2, a recorder R according to the embodiment is configured of a spindle motor 1, a pickup 2 as acquiring device, a driver 3, a strategy controller 4, a modulating unit 5, a combining unit 6, an A/D converter 7, a decoder 8, a CPU 9 as recognizing device, determining device, and recording device, a memory 10, a display 11, an input unit 12 as designating device, and a servo controller 13.

The entire operation will be described below.

Recording information Sin to be recorded on the DVD 100 mounted on the recorder R is first input from the outside to be digitized by the A/D converter 7, and is output to the combining unit 6 as digital recording information Sdin.

The combining unit 6 superimposes and combines the reproducing control information 20 or the like to be used for reproducing the recording information after recorded on the digital recording information Sdin based on control information Scm from the CPU 9, and generates combined recording information Smix to output it to the modulating unit 5.

Next, the modulating unit 5 performs modulating processing such as 8-16 modulation for the combined recording information Smix based on control information Sce from the CPU 9, and outputs the combined recording information Smix as modulation information Sen to the strategy controller 4.

The strategy controller 4 generates a drive pulse which is directed for modulation-driving a semiconductor laser (not shown) in the pickup 2 based on the modulation information Sen, and which is subjected to a processing of forming a shape of recording pit formed on the DVD 100 and outputs the drive pulse as a pulse signal Ssr to the driver 3, based on control information Scs from the CPU 9.

Thus, the driver 3 amplifies the pulse signal Ssr at a preset amplification rate, and generates a drive signal Sd for actually driving the semiconductor laser to output the drive signal to the pickup 2.

Next, the pickup 2 uses the drive signal Sd to drive the incorporated semiconductor laser, and generates a laser beam B for information recording to output it to the DVD 100. When this laser beam B is irradiated on a recording layer (not shown) in the DVD 100, the recording pit corresponding to the contents of the recording information Sin is formed on the recording layer so that the recording information Sin is recorded.

At this time, the pickup 2 irradiates the laser beam B having a constant intensity on the control information area SC in the DVD 100 prior to recording the recording information Sin, and detects the recording speed range information 21, the maximum recording speed information 22, the minimum recording speed information 23, and the strategy information to output these information as a detection signal Spu to the decoder 8.

The decoder 8 decodes the contents of each information in the detection signal Spu, and outputs the decoded contents as decode information Sdc to the CPU 9.

Thus, the CPU 9 generates each control information Scs (including the strategy information), Sce, and Scm for controlling the operations of the respective constituents based on the contents of the decode information Sdc, as well as, control information Ssc described later to output the same to each corresponding constituting member, and entirely controls these constituting members.

On the other hand, the rotation speed of the DVD 100 (that is, recording speed of recording information Sin) is controlled based on control information Sss from the servo controller 13.

The controlling of a focal position of the laser beam B (tracking servo controlling in a direction parallel to the recording layer in the DVD 100, as well as, focus servo controlling in a direction orthogonal to the recording layer) is performed based on control information Ssp from the servo controller 13.

Thus, as for the servo controller 13, each of the control information Sss and Ssp is generated to be output to the spindle motor 1 and the pickup 2 (more specifically, an actuator (not shown) in the pickup 2) based on the control information Ssc from the CPU 9.

The information required when the CPU 9 entirely controls these operations is temporarily stored in the memory 10, the information being memory information Sm, and is read out again as needed to be used for the entire controlling.

The information indicating the operation to be realized by the recorder R is input by a user in the input unit 12, and an operation signal Sop corresponding to this input operation is output from the input unit 12. Then the CPU 9 is operated based on the contents of this operation signal Sop so that a desired operation as the recorder R is realized.

An operation status of the recorder R or the like is displayed on the display 11 composed of a liquid crystal display or the like based on a display signal Sdp indicating the operation status from the CPU 9.

Next, a recording processing according to the embodiment of the recorder R having the above structure will be specifically described using FIG. 3.

As shown in FIG. 3, in the recording processing according to the embodiment, when the DVD 100 is first mounted on the recorder R, and a recording start operation in the input unit 12 is performed, necessary control information is read out from the read-in area LI in the DVD 100 (step S1), the recording speed range information 21, the maximum recording speed information 22, the minimum recording speed information 23, and the strategy information are detected from the control information area SC and decoded (step S2) to be temporarily stored in the memory 10.

Next, based on the contents of the recording speed information 21, it is confirmed whether a recording speed is contained which is executable using the DVD 100 mounted in the recording speed range executable in the recorder R (step S3), and when the recording speed executable using the DVD 100 mounted in the recording speed range executable in the recorder R is not contained (step S3; NO), the DVD 100 is discharged from the recorder R, since information cannot be recorded by the recorder R on the currently-mounted DVD 100 (step S4), and the recording processing according to the embodiment is terminated.

On the other hand, in the determination in step S3, when there is contained the recording speed executable using the DVD 100 mounted in the recording speed range executable in the recorder R (step S3; YES), the recording speed range indicated by the recording speed range information 21 (for example, in the case of the second recording speed range information 21-2 shown in FIG. 1B, double-speed, 4-time speed, 6-time speed, and 8-time speed), as well as, the contents of the maximum recording speed information 22 and the contents of the minimum recording speed information 23 are confirmed in the CPU 9 (step S6), and an operation of designating a recording speed desired at that time is performed in the input unit 9 (step S5). In this case, a configuration may be such that an error rate along with recording/reproducing on the DVD 100 or the like is detected and the CPU 9 automatically designates an optimum recording speed based on the contents thereof.

Whether an actual recording operation using the designated (step S5) recording speed is possible is determined by comparing the designated recording speed with the recognized recording speed range (that is, the recording speed which is in the recording speed range indicated by the recording speed range information 21 or which is equal to or less the maximum recording speed indicated by the maximum recording speed information 22 and is equal to or more than the minimum recording speed indicated by the minimum recording speed information 23) (step S7), and when the actual recording operation using the designated recording speed is possible (step S7; YES), the control information Sss is output to the spindle motor 1 in order to rotate the DVD 100 at the designated recording speed, and the recording information Sin is recorded (step S10) while the DVD 100 is being rotated at the designated recording speed (step S8).

It is confirmed whether all the recording information Sin is recorded (step S11), and when the recording is not terminated (step S11; NO), the processing returns to step S10 to continue the recording processing, and when the recording is completed (step S11; YES), the recording processing according to the embodiment is completed.

On the other hand, in the determination in step S7, when the recording operation using the designated recording speed is not executable (step S7; NO), the recording information Sin is recorded using the recording speed nearest to the designated recording speed among the recording speeds recognized using the recording speed range information 21 (step S9). Thereafter, steps S10 and S11 are repeated using the nearest recording speed to record the recording information Sin.

As described above, according to the operation of the recorder R in the embodiment, since the recording speed range information 21 including at least the basic recording speed is recorded in the control information area SC, the recording speed range information 21 is read when recording the recording information Sin on the DVD 100, and is used for setting the recording speed in the recording so that, even when the recording speed is further improved in the future, the recorder R or the like can be accurately controlled correspondingly to record the recording information Sin, and the standard for the setting of the recording speed can be easily expanded in the future.

In this case, the actual recording processing can be performed based on other recording speed which is set specific to the recorder R based on the recording speed indicated by the recording speed range information 21 or based on the contents of other strategy processing.

Since the contents of the recording speed range information 21 in the respective types of DVD 100 is preset respectively such that the basic recording speed corresponding to one type of DVD 100 is assumed as the recording speed out of the recording speed range corresponding to other type of DVD 100, when the respective types of DVD 1000 are manufactured and sold, the DVD 100 can be manufactured and sold in correspondence to a wide range of recording speed while specifying the recording speed optimum for each DVD 100.

Since the maximum recording speed information 22 and the minimum recording speed information 23 are recorded together, follower performance for a change in the recording speed of the DVD 100 is sufficiently utilized, thereby performing information recording in various manners using many types of recording speeds.

When the maximum recording speed information 22 and the minimum recording speed information 23 are recorded together, and the designated recording speed is contained in the recording speed range recognized by the maximum recording speed information 22 and the minimum recording speed information 23, since the recording information Sin is recorded on the DVD 100 at the designated recording speed, the follower performance for a change in the recording speed of the DVD 100 is sufficiently utilized, thereby performing information recording in various manners using many types of recording speeds.

When the designated recording speed is not contained in the recording speed range of the DVD 100, since the recording information Sin is recorded on the DVD 100 using any recording speed capable of being used in the recorder R when recording the recording information Sin on the DVD 100, the recording information Sin can be recorded using the recording speed optimum for the DVD 100.

In the aforementioned embodiment, there is described the case where the present invention is applied to the recorder R for recording the recording information Sin on the DVD 100, however, the present invention can be applied to a recorder which records information on an existing recordable CD or an optical disk having a recording capacity higher than the currently-developed DVD.

A general-purpose microcomputer can function as the CPU 9 according to the embodiment by acquiring and recording a program corresponding to the flowchart in FIG. 3 via network such as Internet or by recording the program on an information recording medium such as flexible disk or hard disk to be read out and executed by the general-purpose microcomputer.

The invention may be embodied in other specific forms. The present embodiments are therefore to be considered in all respects as illustrative and not restrictive, the scope of the invention being indicated by the appended claims rather than by the foregoing description.

## Claims

1. A method of recording speed range information on a plurality of recording media with different ranges of recording speeds, comprising the steps of:
defining plural speed ranges (21-1, 21-2, 21-3), each comprising a range of recording speeds, and defining for each speed range a basic recording speed contained in the range of recording speeds of the speed range for which it is defined,
defining each basic recording speed such that the respective basic recording speed lies outside the range of recording speeds of the other speed ranges, and
assigning each recording medium of the plurality of recording media to one of the defined speed ranges, such that the range of the recording speeds of the recording medium is included in the range of recording speeds of the assigned speed range, and such that the medium is capable of being recorded at the basic recording speed of the respective speed range, and
recording a speed range information (21) to each of a plurality of recording media, which indicates to which speed range the respective recording medium is assigned.

2. The method of recording according to claim 1,
- comprising the processes of:
acquiring the recording speed range information (21) from one of the plurality of recording media;
determining whether the recording information can be recorded on said one of the plurality of recording media based on the acquired recording speed range information (21); and
recording, when it is determined in the determining process that the recording information can be recorded on said one of the plurality of recording media, at least the recording information on said one of the plurality of recording media at the basic recording speed corresponding to the acquired recording speed range information (21).

3. The method of recording according to claim 1,
comprising the processes of:
acquiring a maximum recording speed information (22) and a minimum recording speed information (23) from one of the plurality of recording media;
recognizing a range of the recording speeds capable of being used when recording the recording information on said one of the plurality of recording media based on the acquired maximum recording speed information and minimum recording speed information;
designating the recording speed to be used when recording the recording information on said one of the plurality of recording media;
determining whether the designated recording speed is contained in the range of the recognized recording speeds; and
recording the recording information on said one of the plurality of recording media at the designated recording speed, when the designated recording speed is contained in the range of the recognized recording speeds.

## Patentansprüche

1. Verfahren zum Aufzeichnen von Geschwindigkeitsbereichsinformationen auf einer Vielzahl von Aufzeichnungsmedien mit verschiedenen Bereichen von Aufzeichnungsgeschwindigkeiten, wobei das Verfahren folgende Schritte umfasst:
Definieren mehrerer Geschwindigkeitsbereiche (21-1, 21-2, 21-3), die jeweils einen Bereich von Aufzeichnungsgeschwindigkeiten umfassen, und für jeden Geschwindigkeitsbereich Definieren einer Basisaufzeichnungsgeschwindigkeit, die in dem Bereich von Aufzeichnungsgeschwindigkeiten des Geschwindigkeitsbereichs, für den sie definiert ist, enthalten ist,
Definieren jeder Basisaufzeichnungsgeschwindigkeit, derart, dass die jeweilige Basisaufzeichnungsgeschwindigkeit außerhalb des Bereichs von Aufzeichnungsgeschwindigkeiten der anderen Geschwindigkeitsbereiche liegt, und
Zuweisen jedes Aufzeichnungsmediums der Vielzahl von Aufzeichnungsmedien zu einem der definierten Geschwindigkeitsbereiche, derart, dass der Bereich der Aufzeichnungsgeschwindigkeiten des Aufzeichnungsmediums in dem Bereich von Aufzeichnungsgeschwindigkeiten des zugewiesenen Geschwindigkeitsbereichs enthalten ist, und derart, dass das Medium mit der Basisaufzeichnungsgeschwindigkeit des jeweiligen Geschwindigkeitsbereichs beschrieben werden kann, und
Aufzeichnen von Geschwindigkeitsbereichsinformationen (21) auf jedem der Vielzahl von Aufzeichnungsmedien, welche anzeigen, welchem Geschwindigkeitsbereich das jeweilige Aufzeichnungsmedium zugewiesen ist.

2. Verfahren zum Aufzeichnen nach Anspruch 1, umfassend folgende Verfahrensschritte:
Erfassen der Aufzeichnungsgeschwindigkeitsbereichsinformationen (21) von einem der Vielzahl von Aufzeichnungsmedien; Feststellen, ob die Aufzeichnungsinformationen auf Basis der erfassten Aufzeichnungsgeschwindigkeitsbereichsinformationen (21) auf dem einen der Vielzahl von Aufzeichnungsmedien aufgezeichnet werden können; und
Aufzeichnen mindestens der den erfassten Aufzeichnungsgeschwindigkeitsbereichsinformationen (21) entsprechenden Aufzeichnungsinformationen auf dem einen der Vielzahl von Aufzeichnungsmedien mit der Basisaufzeichnungsgeschwindigkeit, wenn in dem Feststellungsschritt festgestellt wird, dass die Aufzeichnungsinformationen auf dem einen der Vielzahl von Aufzeichnungsmedien aufgezeichnet werden können.

3. Verfahren zum Aufzeichnen nach Anspruch 1, das folgende Verfahrensschritte umfasst:
Erfassen einer Maximalaufzeichnungsgeschwindigkeitsinformation (22) und einer Minimalaufzeichnungsgeschwindigkeitsinformation (23) von einem der Vielzahl von Aufzeichnungsmedien;
Erkennen eines Bereichs der Aufzeichnungsgeschwindigkeiten, der zum Aufzeichnen der Aufzeichnungsinformationen auf dem einen der Vielzahl von Aufzeichnungsmedien verwendet werden kann, auf Grundlage der erfassten Maximalaufzeichnungsgeschwindigkeitsinformation und der erfassten Minimalaufzeichnungsgeschwindigkeitsinformation;
Festlegen der Aufzeichnungsgeschwindigkeit, die zum Aufzeichnen der Aufzeichnungsinformationen auf dem einen der Vielzahl von Aufzeichnungsmedien zu verwenden ist;
Feststellen, ob die festgelegte Aufzeichnungsgeschwindigkeit in dem Bereich der erkannten Aufzeichnungsgeschwindigkeiten enthalten ist; und
Aufzeichnen der Aufzeichnungsinformationen auf dem einen der Vielzahl von Aufzeichnungsmedien mit der festgelegten Aufzeichnungsgeschwindigkeit, wenn die festgelegte Aufzeichnungsgeschwindigkeit in dem Bereich der erkannten Aufzeichnungsgeschwindigkeiten enthalten ist.

## Revendications

1. Procédé destiné à enregistrer des informations de plage de vitesses sur une pluralité de supports d'enregistrement avec des plages différentes de vitesses d'enregistrement, comprenant les étapes consistant à :
définir une pluralité de plages de vitesses (21-1, 21-2, 21-3), comprenant chacune une plage de vitesses d'enregistrement, et
définir pour chaque plage de vitesses une vitesse d'enregistrement de base contenue dans la plage de vitesses d'enregistrement de la plage de vitesses pour laquelle elle est définie,
définir chaque vitesse d'enregistrement de base de sorte que la vitesse d'enregistrement de base respective se trouve à l'extérieur de la plage de vitesses d'enregistrement des autres plages de vitesses,
affecter chaque support d'enregistrement de la pluralité de supports d'enregistrement à l'une des plages de vitesses définies, de sorte que la plage de vitesses d'enregistrement du support d'enregistrement soit incluse dans la plage de vitesses d'enregistrement de la plage de vitesses affectée, et de sorte que le support soit capable d'être enregistré à la vitesse d'enregistrement de base de la plage de vitesses respective, et
enregistrer une information de plage de vitesses (21) sur chacun d'une pluralité de supports d'enregistrement, indiquant à quelle plage de vitesses le support d'enregistrement respectif est affecté.

2. Procédé d'enregistrement selon la revendication 1, comprenant les processus consistant à :
acquérir les informations de plage de vitesses
d'enregistrement (21) de l'un de la pluralité de supports d'enregistrement ;
déterminer si les informations d'enregistrement peuvent être enregistrées sur ledit un de la pluralité de supports d'enregistrement sur la base des informations de plage de vitesses d'enregistrement acquises (21) ; et
enregistrer, lorsqu'il est déterminé dans le processus de détermination que les informations d'enregistrement peuvent être enregistrées sur ledit un de la pluralité de supports d'enregistrement, au moins les informations d'enregistrement sur ledit un de la pluralité de supports d'enregistrement à la vitesse d'enregistrement de base correspondant aux informations de plage de vitesses d'enregistrement acquises (21).

3. Procédé d'enregistrement selon la revendication 1, comprenant les processus consistant à :
acquérir une information de vitesse d'enregistrement
maximale (22) et une information de vitesse d'enregistrement minimale (23) de l'un de la pluralité de supports d'enregistrement ; reconnaître une plage de vitesses d'enregistrement capable d'être utilisée lors de l'enregistrement des informations d'enregistrement sur ledit un de la pluralité de supports d'enregistrement sur la base de l' information de vitesse d'enregistrement maximale acquise et
l' information de vitesse d'enregistrement minimale acquise ; désigner la vitesse d'enregistrement à utiliser lors de l'enregistrement des informations d'enregistrement sur ledit un de la pluralité de supports d'enregistrement ;
déterminer si la vitesse d'enregistrement désignée est contenue dans la plage de vitesses d'enregistrement reconnue ; et
enregistrer les informations d'enregistrement sur ledit un de ladite pluralité de supports d'enregistrement à la vitesse d'enregistrement désignée, lorsque la vitesse d'enregistrement désignée est contenue dans la plage de vitesses d'enregistrement reconnue.
